# NEW EUROPEAN PATENT SPECIFICATION

(11) **EP 2 501 262 B2**
(45) Date of publication and mention of the opposition decision: **31.07.2019**
(45) Mention of the grant of the patent: 21.10.2015
(21) Application number: 10795824.1
(22) Date of filing: 06.12.2010
(51) Int. Cl.: A47G 27/02, A47G 27/04

(54) **CUSHIONED ABSORBENT MAT**
GEPOLSTERTE ABSORPTIONSMATTE
TAPIS ABSORBANT REMBOURRÉ

(30) Priority: 28.12.2009 US 290398 P; 04.12.2009 GB 0921326
(43) Date of publication of application: 26.09.2012
(73) Proprietor: Mindsinsync Inc., New York, NY 10016 (US)
(72) Inventor: SCORGIE, Iain, New York NY 10018 (US)
(74) Representative: Wood, Graham
(86) International application number: PCT/US2010/059105
(87) International publication number: WO 2011/069158

(56) References cited:
- EP-A1- 0 572 104
- WO-A1-03/087458
- GB-A- 1 204 128
- US-A- 5 733 629
- US-A1- 2005 112 320
- US-A1- 2005 224 000
- US-A1- 2010 209 661

## Description

### BACKGROUND OF THE INVENTION

The invention to which this application relates is to a fabric or textile article - in a form which is typically referred to as a mat and which article is hereinafter referred to as such. However it should be appreciated that any article which can be used as a surface covering and/or can be used to provide comfort to a person sitting, standing or kneeling on the same is incorporated within this application.

### DESCRIPTION OF THE RELATED ART

Conventionally, mats can be used for a number of different purposes such as, for example, the mat can be provided as a floor covering for a portion of a floor surface or can be put to further use such as, for example, to allow more comfortable seating or kneeling to be achieved by a user who sits or kneels on the mat rather than directly on the floor surface. Mats can also be used in areas which may get wet from time to time such as, for example, on the floor surface adjacent a bath or sink. Furthermore in a tiled bathroom, it is common to provide a bath mat that can both offer a slip-resistant, non-tiled surface on which to stand and some absorbent properties to handle inevitable water from sinks, baths or showers.

However, conventionally, mats tend to be relatively thin and therefore provide little comfort to a person sitting or kneeling on the same on a hard floor surface. Furthermore, if the same become wet the shape and/or appearance of the same can be adversely effected. Furthermore, if the same become wet repeatedly then they can quite often absorb and retain moisture therein and never properly dry out such that the same can start to smell, and/or degrade and/or become generally unattractive for use. This tends to mean that, for example, if a mat is provided for use in a bathroom, the mat can quickly become unhygienic and generally unattractive so that the same may need to be discarded relatively quickly after first being used. As a result, the inventor has determined that there is a need to provide a comfortable, slip-resistant, and absorbent bath mat that is also quick drying.

US 2005/224000 A1 describes an orthopedic cushion for a support, comprising padding layer of slow recovery visco-elastic foam. WO 03/087458 A1 discloses a flooring system comprising a subfloor adapted to support and a modular surface covering elements. EP 0572104 A1 describes a bath mat including a cloth layer and a foam backing. US 2005/112320 A1 discloses a foam cushion backings for carpets. GB 1 204 128 A1 describes a foam material comprising an open-celled polyurethane foam impregnated with a flexible, thermoplastic vinyl resin, and a covering layer. US 5 733 629 A discloses a sorbent article comprising a sorbent layer and a texturized polymeric skin layer.

### SUMMARY OF THE INVENTION

The aim of the present invention is to provide an improvement in the terms of an article such as a mat and an improvement to the structure of the same so as to allow the same to be more comfortable in use, to have more potential uses and/or to have a longer life span.

The present invention provides an article for use as a mat and/or cushion according to claim 1. Preferred embodiments are defined in the subclaims 2 to 10 as well as in the description.

According to the invention, there is provided an article for use as a mat and/or cushion, said article including a layer of compressible material and wherein on at least one surface of the layer of the compressible material there is provided a layer of fabric or textile material is a woven textile comprising microfibers having a linear density of less than 1 denier/filament and a weight between 200 and 300 g/m² and having a pile height between 0.25 to 0.44 cm (0.1 and 0.175 in) and wherein the compressible material (4) is an open celled polyurethane foam.

There is therefore provided an article for use to provide a cushioning and/or moisture absorbency effect.

Typically the layer of fabric or textile material forms the external face of the mat, inasmuch that it is this surface which a person contacts when sitting, kneeling or standing on the mat.

In one embodiment the textile or fabric material layer can be of uniform colour or may carry a decorative pattern thereon.

In one embodiment, the compressible material layer is formed of a foam. In one embodiment the compressible material used has a memory in as much that if the state of the layer is changed, such as by weight or pressure being applied to the same then, when the means which causes the change is removed, the material at least partially returns to its original state.

Typically, the change in condition of the compressible material is caused by a person applying pressure to the same such as for example, when the person is sitting, kneeling or sitting on the same and, when the person gets up from the mat, the material returns at least partially, to its original state.

In one embodiment the thickness of the compressible material layer is selected with respect to the particular use to which the mat is to be used. For example, a mat which is provided most typically to be stood on may not have as thick a layer of foam as a mat which is provided to be sat or kneeled upon.

In one embodiment, the fabric or textile material layer has good moisture absorbency characteristics. In this embodiment the fabric or textile material layer is formed by a series of loops of fibres which are held mutually together. Typically the ends of each of the fibres are bound onto a backing layer and it is the backing layer which is attached to the layer of compressible material. The loops of fibres are found to provide very good moisture absorbency such that in the majority of cases the moisture which passes onto the mat in use is wholly held within the fabric or textile material layer.

In one embodiment the backing layer of the textile or fabric material layer and/or a further barrier layer provided intermediate the fabric or textile layer and the compressible material layer, act to restrict or prevent the moisture passing into the compressible material layer.

In one embodiment, the fabric or textile material layer comprises polyester and polyamide.

In one embodiment the compressible material which is used is viscoelastic polyurethane foam.

In one embodiment, the mat also includes a base onto which the compressible material layer is located. In one embodiment, the base is formed of a spandex material (SBR).

In one embodiment a series of linear ribs or indents are provided at spaced intervals at least in the fabric or textile layer. The said ribs or indents can be used to improve absorbency of moisture and/or control the passage of moisture through said layer.

Typically, the fabric or textile material layer, compressible material layer and base are laminated together to form a unitary mat.

Another aspect of the invention relates to a cushioned mat including a layer of absorbent, quick-drying woven textile material, a layer of viscoelastic polyurethane foam material having an open cell structure, the layer of foam material being glued and sewed to the layer of woven textile material to form a textile and foam assembly, and a layer of rubberized base material, glued to a foam material side of the textile and foam assembly.

In accordance with the invention, because the external layer is formed of moisture absorbent material and preferably in the loop structure provided then the moisture is typically wholly or mostly absorbed by the fabric and therefore does not reach the foam. Furthermore because the moisture is held within this layer, it is found that the mat as a whole dries out more quickly, hence reducing the risk of smells and deterioration of the mat occurring.

The provision of the foam provides a comfortable feel to a person when standing, kneeling or sitting on the same.

The provision of the base provides increased slip resistance for the mat on the base.

The mat can be used for any or any combination of uses, such as, changing mat, play mat, pet mat, seat cushion mat, stadium seat cushion mat, picnic seat cushion mat, yoga mat, sports mat, bedroom mat, kitchen mat, kitchen slice mats, computer arm rest mat, tug mat, shoe insoles, crib mat, mattress topper, garden mat, car mat, car seat mat.

### BRIEF DESCRIPTION OF THE DRAWINGS

A specific embodiment of the invention is now described with reference to the accompanying drawings wherein;
Figure 1 illustrates an article in accordance with one embodiment of the invention;
Figure 2 illustrates a cross section along the line AA of Figure 1;
Figure 3 schematically illustrates a cross-sectional view of a strand used in the manufacture of an absorbent fabric or textile layer of an embodiment of a bath mat in accordance with the current invention;
Figure 4 schematically illustrates a cross-sectional view of a plurality of the stands of Figure 3 used to form the material of an absorbent fabric or textile layer of an embodiment of a bath mat in accordance with the current invention.

### DETAILED DESCRIPTION OF THE PREFERRED EMBODIMENTS

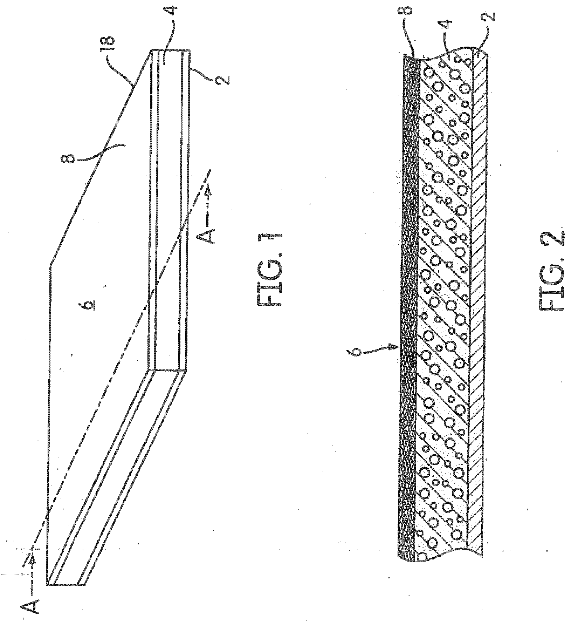

Referring firstly to Figure 1, there is illustrated an article in the form of a mat in accordance with one embodiment of the invention in which the mat includes a base 2 which is formed of a slip resistant material such as, in this embodiment, that known by the Trade Name spandex. This base material is in turn attached to a compressible material layer or core 4 formed preferably of a memory foam such as viscoelastic polyurethane. The external face 6 of the mat, which is the surface on which a person is most likely to step, kneel or sit, is provided as a woven fabric or woven textile material layer 8 which is formed of polyester and polyamide, typically in the range of 75%-85% polyester and 15 to 25% polyamide, more preferably 80% polyester and 20% polyamide.

The arrangements between the different layers of the mat are shown in more detail in Figure 2. In one embodiment a barrier layer may also be provided between the woven textile layer 8 and compressible material layer 4 to prevent moisture from reaching the layer 4 from woven textile layer 8.

Typically the mat comprises a 80% Polyester, 20% Polyamide woven textile layer 8, Memory foam (Polyurethane foam) layer 4 and a spandex base (SBR) 2.

The provision of the woven textile layer 8 on the external face means that, for example, when used adjacent a bath, when a user steps out of the bath and onto the mat, the mat absorbs moisture from the user immediately, drying the feet instantly as the woven textile material layer 8 is a fast absorbing structure.

Normally, with regular mats, once the user steps onto it and then walks off there is a trail of water droplets left, which can be uncomfortable, and even hazardous, and this is avoided in accordance with the present invention.

The provision of the compressible memory foam layer 4 with the combination of the woven textile layer 8 and non-slip base 2 combine to provide a luxurious cushioned and absorbent feel to the mat when stood, kneeled or sat on, which sensation is not achieved by conventional mats which are formed of only a textile or fabric layer. Conventional mats typically either do not have an anti slip base, or have a sprayed on anti slip effect material which if provided does not provide any cushioning effect.

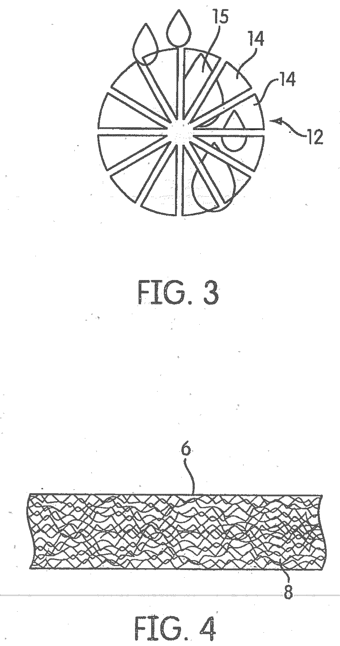

Figure 3 illustrates in schematic cross-section, a yarn 12 of the type used in the invention to form a woven textile material that forms the absorbent layer 8 of the bath mat. The yarn includes a number of strands of fibers 14, which are divided out from a source fiber and then woven together with a plurality of additional fibers, to form the yarn 12. The provision of the yarn allows the strands and hence the material to be absorbent to water 15 and thereby, rather than deflect liquid from the same, liquid is absorbed quickly and hence removes liquid from the other surface such as the user onto which the material has been applied and provides a drying effect on the other surface.

In an embodiment, each fiber 14 has a diameter of the order of a few microns.

For example, an appropriate range may be 1 - 20 µm and a more particular useful range may be 5 - 10 µm. By way of comparison, this range may be thought of as being approximately 100 times finer than human hair and typically 100's of fibers will be used to form each piece of yarn. It will therefore be appreciated that each strand is particularly small in cross-sectional area and, each strand is then used, in combination with other strands, to form a woven material as illustrated in Figure 4. According to the invention, the fibers are microfibers having a linear density of less than 1 denier/filament.

The weaving process to form the material from the yarn includes weaving the yarn together with other stands of yarn to form a woven textile material 8 of the type shown in Figure 4.

In an embodiment, the woven material comprises a combination of strands of polyester and polyamide, for example, nylon. In particular, an embodiment includes from 60-90% polyester by weight with the remaining polyamide. In order to form a bath mat 18 as illustrated in FIG.1, a plurality of yarns 2 are woven together to form a woven textile material 8 that has very good absorbency and drying properties. According to the invention, the fabric is woven into a material having weight between 200 and 300 g/m², and in a particular embodiment, a material having a weight between 250 and 275 g/m².

In practice, such a material may have an absorbency greatly in excess of conventional cotton terry or polyester woven material. Furthermore, it may have drying speeds faster than conventional cotton terry or even 100% polyester materials. According to the invention, the woven textile material 8 has a pile height of 0.25 to 0.44 cm (0.1-0.175 in) particular 0.4 cm (0.157 in).

The woven textile material 8 is glued to a cushioning layer 4 using a glue that is, in an embodiment, selected to both provide a strong bond between the polyurethane and the woven material and be sufficiently flexible to allow for bending of the mat without significant cracking of the glue layer. In a particular embodiment, the glue should allow for moisture to pass from the urethane foam to the woven material without blocking the wicking/drying function of the woven material. In a particular embodiment, the glue may be a sprayable upholstery glue suited for use with foam such as 680S, available from Tai Jia of Guangdong, China.

The cushioning layer 4 may be made from a memory foam material, for example a viscoselastic polyurethane foam having an open cell structure. Such material is, in general, absorbent but slow drying particularly as compared to the micro woven material described above.

As an example, the cushioning layer may be 2.5 cm in thickness, and may generally be within range of 1 cm to 5 cm. For thinner cushioning layer, an insufficient cushioning function may result, while for thicker layers, the overall mat thickness becomes too great and the user may feel as though he or she is sinking too deep into the mat. In a typical mat, the foam density may be 44.85 kg/m³ (2.8 lbs/ft³).

The inventor has determined that in the above described combination the absorbency and drying properties of the woven textile material layer 8 of the same allows for the use of the relatively absorbent and slow-drying polyurethane foam, even in a generally wet/humid environment such as a bathroom. In this combination the absorbent woven textile material 8 wicks moisture away from the polyurethane layer 4.

Once the woven material layer 8 is glued to the cushioning layer 4 the two can be sewn together for additional strength, and optionally to produce a decorative design on the upper surface 6 of the woven textile material layer 8 not shown.

The sewed and glued combination mat is then glued to the non-slip rubberized base material 2. For example, the non-slip layer may be made from a polyurethane material including, for example, polyurethane-polyurea based spandex. The assembly can then attached to a border which may be made, for example, from a woven polyester material.

In an embodiment, the mat may be between 0.37 - 0.74 m² (4 and 8 square feet in area).

## Claims

1. An article for use as a mat and/or cushion said article including a layer of compressible material (4) and wherein on at least one surface of the layer of the compressible material (4) there is provided a layer of fabric or textile material (8),
wherein the layer of fabric or textile material (8) is a woven textile comprising microfibers having a linear density of less than 1 denier/filament and a weight between 200 and 300 g/m² and having a pile height between 0.25 to 0.44 cm (0.1 and 0.175 in), and
wherein the compressible material (4) is an open celled polyurethane foam.

2. An article according to claim 1 wherein the layer of fabric or textile material (8) forms the external face of the article.

3. An article according to claim 1 wherein the layer of fabric or textile material (8) is capable of absorbing moisture from a surrounding environment or object which is placed in contact therewith.

4. An article according to claim 1 wherein the layer of fabric or textile (8) is formed by a series of loops of fibres which are held mutually together.

5. An article according to claim 4 wherein the ends of each of the fibres are bound onto a backing layer and it is the backing layer which is attached to the layer of compressible material (4).

6. An article according to claim 1 wherein any moisture which passes onto the layer of fabric or textile is substantially wholly held within the said layer of the article.

7. An article according to claim 6 wherein a backing layer of the layer of fabric or textile material (8) and/or a further barrier layer provided intermediate the layer of compressible material (4) and the layer of fabric or textile material restricts the passage of moisture to the compressible material layer (4).

8. An article according to claim 1 wherein the fabric or textile material layer (8) comprises polyester and polyamide.

9. An article according to claim 1 wherein the article includes a base layer (2) located on the face of the layer of compressible material (4) which opposes that on which the layer of fabric or textile material (8) is located.

10. An article according to claim 9 wherein the fabric or textile material layer (8), compressible material layer (4) and base layer (2) are laminated together to form a unitary mat.

## Patentansprüche

1. Artikel zur Verwendung als Matte und/oder Polster, wobei der genannte Artikel eine Schicht aus zusammendrückbarem Material (4) enthält und wobei auf wenigstens einer Oberfläche der Schicht aus dem zusammendrückbaren Material (4) eine Stoff- oder Textilmaterialschicht (8) bereitgestellt ist,
wobei die Stoff- oder Textilmaterialschicht (8) eine gewebte Textilie ist, die Mikrofasern mit einer linearen Dichte von weniger als 1 Denier/Filament und ein Gewicht zwischen 200 und 300 g/m² aufweist und eine Florhöhe zwischen 0,25 und 0,44 cm (0,1 und 0,175 Zoll) hat, und
wobei das zusammendrückbare Material (4) ein offenporiger Polyurethanschaum ist.

2. Artikel nach Anspruch 1, wobei die Stoff- oder Textilmaterialschicht (8) die Außenseite des Artikels bildet.

3. Artikel nach Anspruch 1, wobei die Stoff- oder Textilmaterialschicht (8) Feuchtigkeit aus einem umgebenden Umfeld oder Objekt, das damit in Kontakt gebracht wird, aufnehmen kann.

4. Artikel nach Anspruch 1, wobei die Stoff- oder Textilschicht (8) von einer Reihe von Faserschlingen gebildet wird, die gegenseitig zusammengehalten werden.

5. Artikel nach Anspruch 4, wobei die Enden von jeder der Fasern an eine Trägerschicht gebunden sind und es die Trägerschicht ist, die an der Schicht aus zusammendrückbarem Material (4) angebracht ist.

6. Artikel nach Anspruch 1, wobei Feuchtigkeit, die auf die Stoff- oder Textilschicht übergeht, im Wesentlichen vollständig in der genannten Schicht des Artikels gehalten wird.

7. Artikel nach Anspruch 6, wobei eine Trägerschicht der Stoff- oder Textilmaterialschicht (8) und/oder eine weitere Sperrschicht, die zwischen der Schicht aus zusammendrückbarem Material (4) und der Stoff- oder Textilmaterialschicht bereitgestellt ist, den Durchgang von Feuchtigkeit zu der Schicht aus zusammendrückbarem Material (4) beschränkt.

8. Artikel nach Anspruch 1, wobei die Stoff- oder Textilmaterialschicht (8) Polyester und Polyamid aufweist.

9. Artikel nach Anspruch 1, wobei der Artikel eine Grundschicht (2) enthält, die auf der Seite der Schicht aus zusammendrückbarem Material (4) liegt, die der entgegengesetzt ist, auf der die Stoff- oder Gewebematerialschicht (8) liegt.

10. Artikel nach Anspruch 9, wobei die Stoff- oder Textilmaterialschicht (8), die Schicht aus zusammendrückbarem Material (4) und die Grundschicht (2) miteinander zu einer einteiligen Matte laminiert sind.

## Revendications

1. Article destiné à une utilisation en tant que tapis et/ou coussin, ledit article incluant une couche de matière compressible (4) et dans lequel sur au moins une surface de la couche de matière compressible (4) est prévue une couche de tissu ou de matière textile (8),
la couche de tissu ou de matière textile (8) étant un textile tissé comprenant des microfibres ayant une densité linéaire inférieure à 1 denier/filament et un poids entre 200 et 300 g/m² et ayant une hauteur de poils entre 0,25 à 0,44 cm (0,1 et 0,175 pouce), et
la matière compressible (4) est une mousse polyuréthanne à alvéoles ouvertes.

2. Article selon la revendication 1, dans lequel la couche de tissu ou de matière textile (8) forme la face externe de l'article.

3. Article selon la revendication 1, dans lequel la couche de tissu ou de matière textile (8) est apte à absorber de l'humidité à partir d'un environnement avoisinant ou d'un objet qui est placé en contact avec celle-ci.

4. Article selon la revendication 1, dans lequel la couche de tissu ou de textile (8) est formée par une série de boucles de fibres qui sont mutuellement maintenues ensemble.

5. Article selon la revendication 4, dans lequel les extrémités de chacune des fibres sont liaisonnées sur une couche de support et c'est la couche de support qui est attachée à la couche de matière compressible (4).

6. Article selon la revendication 1, dans lequel toute humidité qui passe sur la couche de tissu ou de textile est substantiellement entièrement retenue au sein de ladite couche de l'article.

7. Article selon la revendication 6, dans lequel une couche de support de la couche de tissu ou de matière textile (8) et/ou une couche-barrière supplémentaire prévue entre la couche de matière compressible (4) et la couche de tissu ou de matière textile restreint le passage de l'humidité vers la couche de matière compressible (4).

8. Article selon la revendication 1, dans lequel la couche de tissu ou de matière compressible (8) comprend du polyester et du polyamide.

9. Article selon la revendication 1, l'article incluant une couche de base (2) localisée sur la face de la couche de matière compressible (4) qui est opposée à celle sur laquelle la couche de tissu ou de matière textile (8) est localisée.

10. Article selon la revendication 9, dans lequel la couche de tissu ou de matière textile (8), la couche de matière compressible (4) et la couche de base (2) sont stratifiées ensemble afin de former un tapis unitaire.
